# FASCICULE DE BREVET EUROPEEN

(11) **EP 4 330 088 B1**
(45) Date de publication et mention de la délivrance du brevet: **01.07.2026**
(21) Numéro de dépôt: 22725815.9
(22) Date de dépôt: 26.04.2022
(51) Int. Cl.: B60R 19/18

(54) **PIECE COMPOSITE SACRIFICIELLE ABSORBANT L'ENERGIE LORS D'UNE COLLISION D'UN VEHICULE**
OPFERVERBUNDTEIL ZUR ABSORPTION VON ENERGIE WÄHREND EINES FAHRZEUGAUFPRALLS
SACRIFICIAL COMPOSITE PART THAT ABSORBS ENERGY DURING A VEHICLE COLLISION

(30) Priorité: 27.04.2021 FR 2104352
(43) Date de publication de la demande: 06.03.2024
(73) Titulaire: HUTCHINSON, 75008 Paris (FR)
(72) Inventeur: VALEMBOIS, Guy, 31650 LAUZERVILLE (FR)
(74) Mandataire: Gevers & Orès
(86) Numéro de dépôt international: PCT/EP2022/061096
(87) Numéro de publication internationale: WO 2022/229216

(56) Documents cités:
- EP-A1- 1 607 272
- EP-A1- 2 371 677
- FR-A1- 2 960 838
- US-A1- 2003 030 290
- US-A1- 2017 072 884
- US-A1- 2019 263 342

## Description

La présente invention concerne une pièce composite destinée à être un élément sacrificiel absorbant l'énergie qui est libérée au moment d'une collision d'un véhicule avec un obstacle quelconque.

Lors d'une collision, ou crash, d'un véhicule avec un objet, la fonction de la pièce qui permet de sécuriser les personnes et/ou les objets qui sont à l'intérieur de ce véhicule consiste à être l'élément sacrificiel permettant la localisation de l'endommagement consécutif à ladite collision en dehors de la zone à protéger, tout en limitant les effets dynamiques supportés par les personnes et/ou objets à protéger.

La pénétration d'un corps dans la pièce composite sacrificielle absorbant l'énergie se fait sous un effort de pénétration évolutif pendant l'endommagement résultant de la collision.

La loi d'évolution de l'effort lors du déplacement est une caractéristique essentielle de la pièce composite sacrificielle.

En effet, l'effort engendré lors d'un effondrement de ladite pièce au moment d'une collision se traduit en accélération pour les personnes supportant la collision ou en effort pour les objets que l'on souhaite protéger.

D'autre part, la profondeur de pénétration du corps dans la pièce est toujours limitée par des contraintes d'encombrement.

On notera ainsi η l'efficacité d'un système de maîtrise du crash. Cette efficacité η correspond au rapport, en pourcentage, entre E, qui est l'énergie absorbée par la pièce sacrificielle lors du crash, et Ei qui correspond à l'énergie idéalement absorbable par une pièce sacrificielle théorique.

L'énergie absorbée est directement l'intégrale de l'effort lors du déplacement, c'est-à-dire la surface sous la courbe Effort-Déplacement. L'efficacité η d'un système de maîtrise de crash est donc directement le rapport des surfaces sous la courbe E représentant l'énergie effectivement absorbée et Ei, l'énergie idéalement absorbable.

Pour un effort maximal F maxi déterminé et un déplacement maximal d maxi, l'énergie théorique absorbable idéalement est notée Ei=F maxi * d maxi.

Dans l'état actuel de la technique, on connait des assemblages absorbant l'énergie, en cas de crash d'un véhicule, présentant des sections d'effondrement constantes, de forme correspondant à des juxtapositions de cellules, celles-ci pouvant être de type circulaires ou hexagonales. De tels dispositifs peuvent également être dénommés « assemblages d'écrasement ».

Ces assemblages peuvent être fabriqués à partir de matériaux métalliques, notamment en aluminium ou en acier.

On connait ainsi des assemblages d'alvéoles en aluminium constituant des éléments de protection périphériques protégeant, en cas de collision, les batteries d'un véhicule électrique.

Le principe d'absorption énergétique de ce type d'assemblage est le plissement longitudinal des alvéoles qui le composent.

Cela étant, de tels assemblages présentent notamment l'inconvénient d'aboutir à une forme finale plissée ayant un encombrement entraînant une réduction d'environ un tiers de la course.

Un autre inconvénient de ces assemblages réside dans le fait que, la réponse en effort pour un impacteur cylindrique est fortement croissante au cours du choc, du fait de l'augmentation de la surface de contact entre l'impacteur et la structure impactée, ce qui aboutit finalement à une efficacité énergétique très faible.

On connait également, du document de la demande de brevet US 2019/263342 A1 un ensemble d'absorption d'énergie du type décrit précédemment, pour un véhicule, comprenant un compartiment incorporant une pluralité d'éléments unitaires aptes à absorber l'énergie, fabriqués à partir d'un polymère et de fibres de renfort.

Chacun de ces éléments de l'ensemble est formé d'une structure creuse allongée et cylindrique s'étendant entre une première extrémité et une seconde extrémité, la structure étant de section circulaire, formant ainsi un ensemble d'alvéoles tronconiques.

Dans cet ensemble d'absorption, la structure creuse cylindrique de chaque alvéole de l'ensemble peut être définie par un premier diamètre à la première extrémité de ladite structure, et par un deuxième diamètre à la deuxième extrémité de celle-ci, ledit deuxième diamètre pouvant être inférieur audit premier diamètre, tandis que la deuxième extrémité est disposée à l'extérieur de la première extrémité par rapport au véhicule.

En d'autres termes, la deuxième extrémité des alvéoles, de diamètre inférieur à celui de la première extrémité, est écrasée, lors d'une collision, avant que la première extrémité des alvéoles subisse également l'écrasement, le choc se propageant donc depuis la deuxième extrémité des alvéoles vers la première extrémité de celle-ci.

A noter également que l'épaisseur de la paroi des alvéoles tronconiques peut être prévue variable le long de l'axe longitudinal desdites alvéoles Ces dernières présentent, dans ce cas, au niveau de la première extrémité de l'alvéole, une épaisseur supérieure à l'épaisseur de la deuxième extrémité au niveau de laquelle est initiée l'écrasement en cas de collision. Également, dans cette hypothèse où l'épaisseur est variable, décroissante depuis la première extrémité vers la seconde, le diamètre de l'alvéole est, quant à lui, croissant depuis la première vers la deuxième extrémité de l'alvéole, au niveau de laquelle est initié le choc.

Cela étant, une telle solution présente le risque d'une rupture de la paroi des alvéoles, que ce soit au niveau de la zone de contact avec le corps impactant, ou bien au niveau du pied de l'alvéole. En outre, la tenue en flexion des alvéoles peut encore être améliorée.

L'un des objectifs de la présente invention est de proposer une pièce composite sacrificielle, absorbant l'énergie lors d'un choc, présentant une efficacité améliorée en comparaison avec les dispositifs actuels.

La pièce composite sacrificielle selon la présente invention permet ainsi, dans la limitation de la course de pénétration, et sous un effort maximal limite à ne pas dépasser, d'augmenter significativement l'énergie de crash absorbable.

Plus particulièrement, l'objectif de la présente invention est de proposer une solution sous la forme d'une pièce composite sacrificielle susceptible d'optimiser l'efficacité de son comportement lors d'une collision ou d'un crash, en particulier dans le cadre automobile, ou l'une des interactions la plus pénalisante pour les personnes ou objets s'effectue avec des poteaux ou des arbres fixes lors des collisions.

L'une des finalités de la présente invention est de permettre la réalisation d'une telle pièce pour la protection des batteries, dans les packs batteries, de véhicules électriques, sans que cette finalité soit pour autant limitative de l'invention.

L'interaction entre une structure impactée (automobile) et un corps impacteur de forme globalement cylindrique (sous la forme d'un arbre fixe ou d'un poteau fixe) est telle qu'au tout début du contact, au moment de la collision entre les deux éléments, la surface commune entre ledit corps cylindrique et la structure est très limitée, avant que cette surface commune augmente progressivement avec l'enfoncement de l'élément impacteur dans la structure impactée.

Cette spécificité d'interaction entre les deux éléments engendre une loi d'évolution de l'effort en fonction de la pénétration fortement croissante, ce qui conduit à avoir une efficacité η, du système de maîtrise du crash, très faible, en d'autres termes, une énergie absorbée par la structure impactée très faible.

Afin d'améliorer notamment cette efficacité η, la présente invention propose des modes de réalisation permettant une maîtrise de l'effort de pénétration du corps impacteur dans la pièce composite sacrificielle, qui doit être maximal tout en étant le plus constant possible tout le long de la durée du choc, et ce malgré la spécificité des impacteurs servant aux tests de crash, qui sont cylindriques.

A cet effet, la présente invention concerne plus particulièrement une pièce composite sacrificielle absorbant l'énergie libérée au moment d'une collision d'un véhicule avec un objet impactant, ladite pièce étant constituée d'un assemblage d'une pluralité d'alvéoles, chaque alvéole comportant une paroi reliant une première extrémité et une deuxième extrémité de ladite alvéole, la direction de pénétration de l'objet impactant dans ladite pièce allant depuis ladite première extrémité vers ladite deuxième extrémité.

Ladite pièce conforme à l'invention est caractérisée en ce que la paroi périphérique de chaque alvéole présente une épaisseur (e) décroissante depuis ladite première extrémité vers ladite seconde extrémité de ladite alvéole, dans la direction de pénétration de l'objet impactant.

Selon un mode particulier de réalisation :
- chacune des alvéoles qui composent la pièce composite sacrificielle de l'invention présente une section transversale interne dont la surface est croissante depuis ladite première extrémité vers ladite seconde extrémité de ladite alvéole, dans la direction de pénétration de l'objet impactant ;

Selon l'invention
- la section transversale des alvéoles est globalement circulaire ; dans ce cas, avantageusement, chaque alvéole de section circulaire de l'assemblage est reliée à au moins une alvéole adjacente au moyen d'un élément de liaison sous la forme d'une cloison dont l'épaisseur (e') est décroissante dans la direction de pénétration de l'objet impactant ;

Selon un mode particulier de réalisation
- la pièce composite comporte une semelle inférieure considérant la direction de pénétration de l'objet impactant et/ou une barre de liaison surplombant les alvéoles considérant la direction de pénétration de l'objet impactant.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

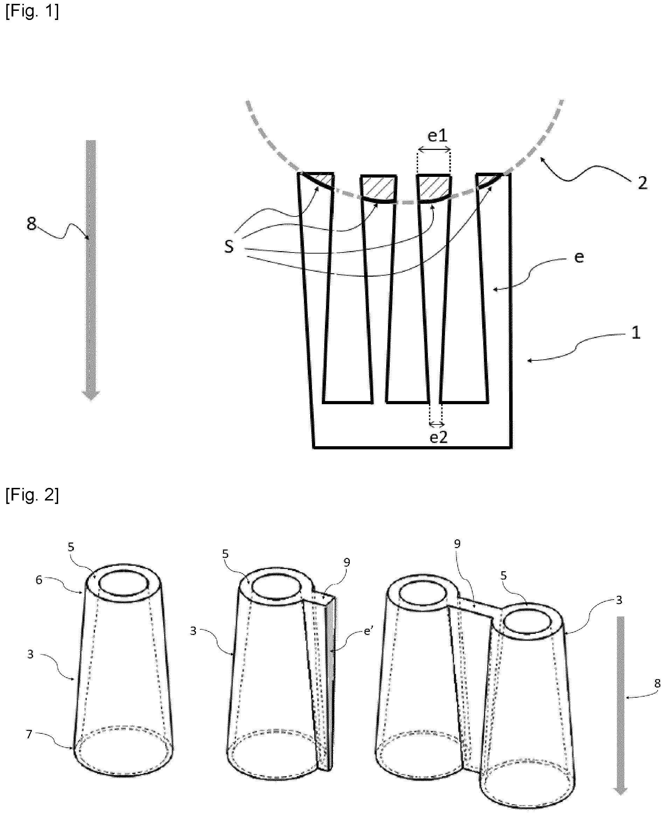

[Fig.1] représente, de manière schématique et en coupe transversale, la pénétration d'un objet impactant de forme globalement cylindrique dans une pièce sacrificielle composite selon l'invention, comportant une pluralité d'alvéoles, chaque alvéole comportant une première extrémité et une deuxième extrémité reliées entre elles par une paroi dont l'épaisseur est décroissante selon la direction de pénétration de l'objet impactant dans ladite pièce, cette direction de pénétration étant symbolisée par une flèche sur la figure ;
[Fig.2] illustre schématiquement et en perspective, d'une part, à gauche de cette figure, un mode de réalisation particulier d'une alvéole unitaire qui peut composer la pièce sacrificielle de l'invention, ladite alvéole présentant une section transversale sensiblement circulaire et une paroi périphérique, représentée en pointillés, dont l'épaisseur est décroissante dans la direction de pénétration de l'objet impactant symbolisée par une flèche, d'autre part, au centre de la figure, la même alvéole avec une portion d'un élément de liaison à une seconde alvéole, dont l'épaisseur est représentée décroissante dans la direction de pénétration de l'objet impactant, et également, à droite de la figure, un module comportant deux alvéoles unitaires reliées entre elle par un élément de liaison ;

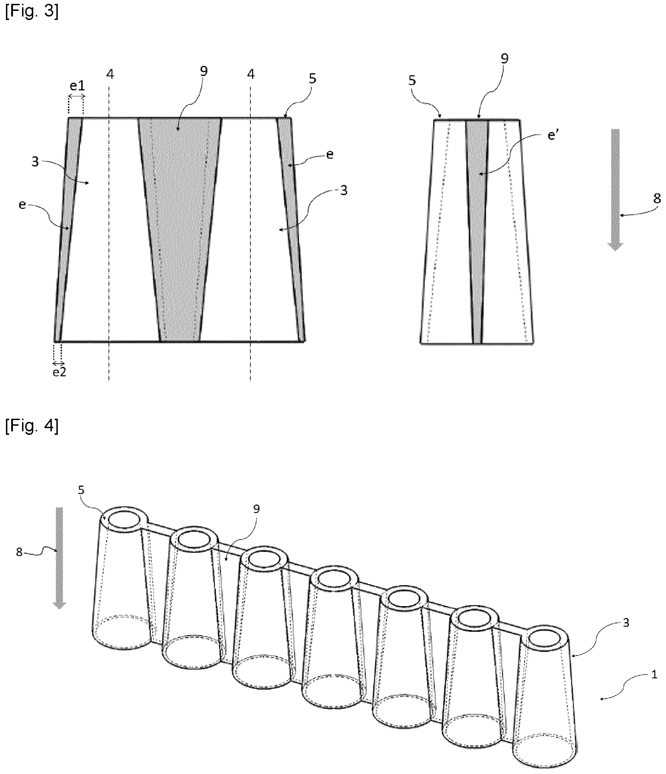

[Fig.3] représente schématiquement une vue selon des coupes dans les deux plans de symétrie du module représenté à droite sur la figure 2 et comportant deux alvéoles reliées entre elles par un élément de liaison ;
[Fig.4] illustre schématiquement et en perspective un premier mode de réalisation particulier d'une pièce composite, formée par l'association d'une pluralité d'alvéoles unitaires dont la section transversale est sensiblement circulaire, agencées, dans une première variante, sous la forme d'une poutre longiligne, deux alvéoles adjacentes étant reliées entre elles par un élément de liaison ;

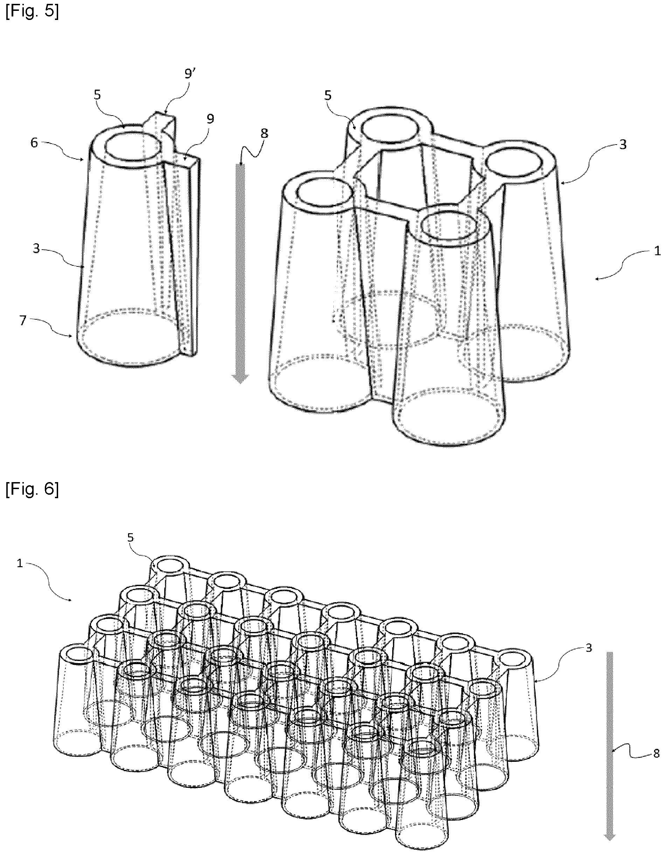

[Fig.5] illustre schématiquement, et en perspective, un mode de réalisation particulier d'une alvéole unitaire qui peut composer la pièce de l'invention comportant deux portions d'élément de liaison agencées selon des directions orthogonales (à gauche de la figure), l'épaisseur de la paroi périphérique de l'alvéole et de l'élément de liaison étant toujours décroissante dans la direction de pénétration de l'objet impactant, et, à droite de la figure, un module composé de quatre de ces alvéoles unitaires reliées entre elles, chaque alvéole étant reliée aux deux alvéoles qui lui sont adjacentes par deux éléments de liaison positionnés dans des plans orthogonaux ;
[Fig.6] illustre schématiquement et en perspective une deuxième variante d'une pièce composite formée par l'association d'une pluralité d'alvéoles dont la section transversale est sensiblement ronde, agencées en sorte de former une boîte rectangulaire dont la longueur et la largeur peuvent varier ;

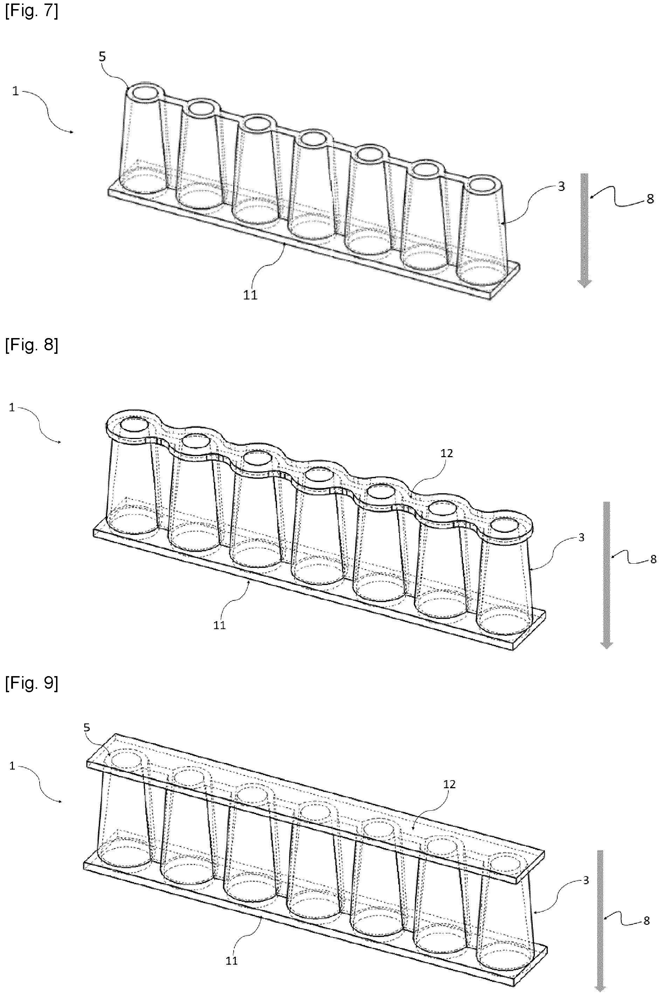

[Fig.7] illustre schématiquement et en perspective une pièce composite sacrificielle sous la forme d'une poutre longiligne similaire à celle représentée sur la figure 4, une semelle inférieure, considérant la direction de pénétration de l'objet impactant, étant ajoutée à celle-ci ;
[Fig.8] illustre schématiquement et en perspective une pièce composite sacrificielle similaire à celle de la figure 7 et incorporant en outre une barre de liaison surplombant les alvéoles sous la forme d'une pluralité d'anneaux accolés linéairement, un anneau surplombant une alvéole, selon un premier exemple de réalisation ;
[Fig.9] illustre schématiquement et en perspective une pièce composite sacrificielle similaire à celle de la figure 7 et incorporant en outre une barre de liaison surplombant les alvéoles, ladite barre de liaison étant de forme rectangulaire, selon un deuxième exemple de réalisation ;

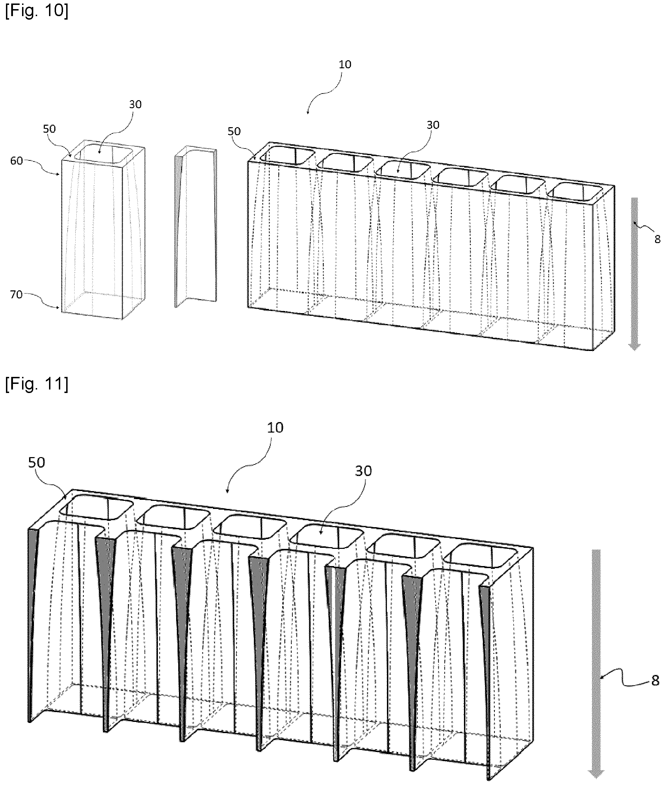

[Fig.10] illustre schématiquement et en perspective, à gauche sur la figure, une alvéole unitaire de section transversale globalement carrée, associée à d'autres alvéoles similaires en sorte de former un deuxième mode de réalisation particulier d'une pièce composite sacrificielle, dont une première variante, sous la forme d'une poutre rectiligne, est représentée à droite sur la figure, formée par l'association d'une pluralité d'alvéoles dont la section transversale est globalement carrée juxtaposées, et dont l'épaisseur de paroi périphérique est décroissante dans la direction de pénétration de l'objet impactant comme cela est illustré sur la coupe de l'alvéole unitaire, au centre de la figure ;
[Fig.11] illustre schématiquement une coupe transversale d'une deuxième variante du deuxième mode de réalisation d'une pièce composite sacrificielle de l'invention, cette dernière comportant une pluralité de poutres rectilignes dont l'une est représentée sur la figure 10, en sorte de former une boîte de forme rectangulaire, l'épaisseur de paroi des alvéoles étant visiblement décroissante dans la direction de pénétration de l'objet impactant ;

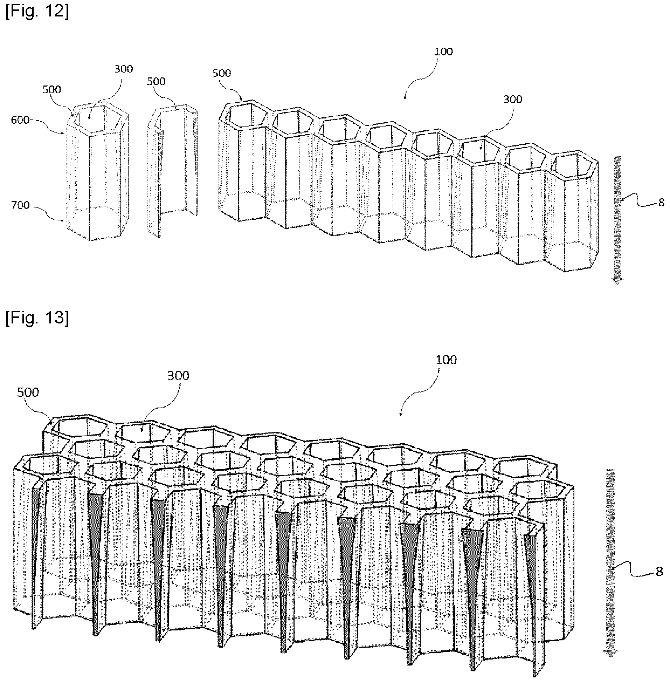

[Fig.12] illustre schématiquement et en perspective, à gauche sur la figure, une alvéole unitaire de section transversale globalement hexagonale, prévue pour être associée à d'autres alvéoles similaires en sorte de former un troisième mode de réalisation particulier d'une pièce composite sacrificielle, dont une première variante, sous la forme d'une poutre rectiligne, est représentée à droite sur la figure, formée par l'association d'une pluralité d'alvéoles juxtaposées dont la section transversale est globalement hexagonale, et dont l'épaisseur de paroi périphérique est décroissante selon la direction de pénétration de l'objet impactant comme cela est illustré sur la vue en coupe de l'alvéole unitaire, au centre de la figure ;
[Fig.13] illustre schématiquement une coupe transversale d'une deuxième variante du troisième mode de réalisation d'une pièce composite sacrificielle de l'invention, cette dernière comportant une pluralité de poutres rectilignes dont l'une est représentée sur la figure 12, en sorte de former une boîte de forme globalement rectangulaire, l'épaisseur de paroi des alvéoles étant visiblement décroissante dans la direction de pénétration de l'objet impactant ;

En référence à ces dessins, la présente invention est relative à une pièce composite sacrificielle 1, 10, 100 destinée plus particulièrement à absorber une proportion optimisée, et la plus importante possible, de l'énergie libérée au moment d'une collision d'un véhicule avec un objet impactant 2, représenté sur la figure 1, celui-ci pouvant être de forme globalement cylindrique, telle qu'un arbre ou un poteau, considérant toutefois que l'objet impactant 2 peut être de forme quelconque.

Comme sa dénomination l'indique, la pièce 1, 10, 100 conforme à la présente invention est destinée à être l'élément sacrificiel permettant une sécurisation optimale des personnes et des biens qui sont positionnés à l'intérieur d'un véhicule subissant une collision avec un objet impactant 2.

Plus spécifiquement, la fonction de ladite pièce composite sacrificielle 1, 10, 100, est de permettre la localisation de l'endommagement consécutif à la collision en dehors de la zone du véhicule qui doit être protégée, et tout en limitant les effets dynamiques que sont susceptibles de subir les personnes ou objets dans le véhicule impacté.

De manière générale, ladite pièce composite sacrificielle 1, 10, 100 de l'invention est composée de l'assemblage d'une pluralité d'alvéoles 3, 30, 300 consistant en des structures creuses allongées définissant un axe longitudinal 4, celui-ci étant représenté plus particulièrement sur la figure 3.

Tout préférentiellement, les alvéoles 3, 30, 300 de ladite pièce 1, 10, 100, de l'invention sont fabriquées à partir d'un matériau composite composé de fibres de renfort noyées dans une résine.

La mise en œuvre d'un matériau composite est particulièrement intéressant dans la réalisation des pièces selon l'invention. En effet, le mode de ruine en crash d'une telle alvéole composite 3, 30, 300 se fait par destruction locale du matériau composite en compression. Cela permet, d'une part, d'atteindre des niveaux de chargement importants, plus importants notamment que la sollicitation de flexion utilisée dans le plissage des parois métalliques et, d'autre part, de consommer l'intégralité de la course de pénétration disponible. En effet, pour ce point, le volume de matière désintégrée par la pénétration a évolué pendant le choc.

Dans la présente invention, on cherche plus particulièrement à utiliser ces avantages de l'usage d'un matériau composite, en les associant à des formes tridimensionnelles, décrites plus en détails ci-après, permettant d'avoir une maîtrise de l'effort de pénétration d'un corps impactant 2, celui-ci se présentant notamment sous la forme d'un corps cylindrique.

Ainsi, les alvéoles 3, 30, 300 peuvent présenter une section transversale variable dans une direction perpendiculaire à leur axe longitudinal 4, et dont certains exemples de réalisation préférentiels, notamment section ronde, carrée, ou hexagonale, seront décrits plus en détails ci-après dans la présente description.

Chacune des alvéoles 3, 30, 300 qui compose l'assemblage pour l'obtention de la pièce composite sacrificielle 1, 10, 100 de l'invention comporte une paroi périphérique 5, 50, 500 s'étendant depuis une première extrémité 6, 60, 600 de ladite alvéole 3, 30, 300, vers une deuxième extrémité 7, 70, 700, opposée à ladite première extrémité.

A noter que l'on considère, dans la présente invention, une direction de pénétration 8 de l'objet impactant 2 dans le véhicule, et donc dans la pièce composite sacrificielle 1, 10, 100, cette direction 8 étant symbolisée sur les figures des dessins ci-joints par une flèche, qui va depuis ladite première extrémité 6, 60, 600 vers ladite deuxième extrémité 7, 70, 700 des alvéoles 3, 30, 300 qui composent ladite pièce 1, 10, 100.

Selon une caractéristique particulière à la pièce composite sacrificielle 1, 10, 100 de la présente invention, la paroi périphérique 5, 50, 500 de chacune des alvéoles 3, 30, 300 dont l'assemblage permet de constituer ladite pièce 1, 10, 100 présente une épaisseur e décroissante le long de l'axe longitudinal 4 de la structure creuse de chaque alvéole 3, 30, 300, dans la direction de pénétration 8, depuis la première extrémité 6, 60, 600 vers la seconde extrémité 7, 70, 700 de chacune des alvéoles 3, 30, 300.

Une telle variation de l'épaisseur e est représentée sur les figures jointes, dans certains cas par l'intermédiaire de traits pointillés sur les figures illustrant les alvéoles 3, 30, 300 en perspective, une telle variation de l'épaisseur e étant plus particulièrement visible sur les figures 1, 3, 11 et 13.

Plus spécifiquement encore, il est possible de définir une première épaisseur e1 de la première extrémité 6, 60, 600 de la paroi périphérique 5, 50, 500 de chacune des alvéoles 3, 30, 300, et une deuxième épaisseur e2 de la seconde extrémité 7, 70, 700 de ladite paroi périphérique 5, 50, 500.

Ladite deuxième épaisseur e2 est par conséquent inférieure à ladite première épaisseur e1, et l'épaisseur e de la paroi périphérique 5, 50, 500 de chacune des alvéoles 3, 30, 300 varie, avantageusement, de manière linéaire le long de l'axe longitudinal 4 de ladite alvéole 3, 30, 300.

La première e1 et la seconde épaisseur e2 de la paroi périphérique des alvéoles, e1 étant supérieure à e2, sont représentées plus spécifiquement sur les figures 1 et 3 des dessins ci-joints.

Grâce à la variation d'épaisseur e des parois des alvéoles 3, 30, 300, décroissante de e1 à e2 le long de leur axe longitudinal 4, dans la direction de pénétration 8 de l'objet impactant 2, l'intersection desdites alvéoles 3, 30, 300 de la pièce composite 1, 10, 100 qui est sollicitée, autrement dit la surface de paroi d'alvéoles en contact avec l'objet 2, dans le cas d'un impacteur plan (non représenté), se réduit avec la pénétration.

Lorsqu'une telle pièce composite sacrificielle 1, 10, 100, est impactée par un corps cylindrique 2, comme illustré sur la figure 1, l'intersection entre la surface cylindrique de ce dernier et ladite pièce 1 s'effectue avec une section S de contact qui évolue peu avec la pénétration. Cela s'explique par le fait que la réduction de section de ladite pièce 1, 10, 100, du fait de la réduction d'épaisseur e des parois périphériques des alvéoles 3, 30, 300 qui la composent, compense l'augmentation de la zone d'impact, lors de l'enfoncement dans la direction 8.

Sur la figure 1 ci-jointe, l'objet impactant 2 de forme cylindrique est représenté en traits pointillés, tandis que l'intersection entre la surface cylindrique dudit objet 2 et la paroi des alvéoles de la pièce composite 1 est représentée en traits noirs continus.

Le matériau composite de la pièce sacrificielle 1, 10, 100 s'effondrant à une contrainte de compression constante, l'effort restitué est alors proportionnel à la section de contact, donc évolue peu, ce qui permet d'avoir un coefficient d'efficacité η élevé, en d'autres termes une proportion d'énergie, qui est libérée au moment de la collision, absorbée par la pièce de l'invention 1, 10, 100 particulièrement élevée.

Tout préférentiellement, outre la variation de l'épaisseur e le long de l'axe longitudinal 4 de la structure creuse des alvéoles 3, 30, 300, selon une autre particularité avantageuse de la présente invention, chacune de ces alvéoles 3, 30, 300 qui composent la pièce composite sacrificielle 1, 10, 100 présente une section transversale interne, dans une direction perpendiculaire à l'axe longitudinal 4 de ladite alvéole 3, 30, 300 dont la surface est croissante depuis la première extrémité vers ladite seconde extrémité de ladite alvéole 3, 30, 300, autrement dit dans la direction de pénétration 8 de l'objet impactant 2.

Ainsi, dans l'exemple de réalisation qui sera décrit plus en détails ci-dessous en référence aux figures 2 à 9, dans lequel les alvéoles 3 de la pièce composite 1 présentent une section transversale circulaire, le diamètre desdites alvéoles 3 est croissant selon la direction de pénétration 8 de l'objet impactant 2 dans ladite pièce 1.

En d'autres termes, les alvéoles 3 peuvent être globalement coniques, avec une base, ou pied, correspondant à la seconde extrémité 7 des alvéoles 3, d'un diamètre plus grand que celui de la tête, correspondant à la première extrémité 6 des alvéoles 3.

Une telle géométrie ainsi décrite est très aisément démoulable, ce qui permet une fabrication peu onéreuse d'une boîte composite sacrificielle 1 dont les alvéoles 3 sont coniques.

Dans un tel mode de réalisation, l'épaisseur e des parois 5, 50, 500 des alvéoles 3, 30, 300 est décroissante de la tête 6, 60 ,600 au pied 7, 70, 700, cette variation d'épaisseur e est telle que la section S est décroissante avec la pénétration, cette dernière pouvant être notée x, selon la direction 8. La faiblesse d'épaisseur e est compensée, au pied 7, 70, 700, par une surface, notamment un diamètre, plus important. Par conséquent, une inertie de section droite est croissante avec la valeur x, et cette particularité permet d'avoir une bonne tenue en flexion de la pièce composite 1, 10, 100. On évite ainsi les ruptures au niveau de la deuxième extrémité 7, 70, 700, dans la zone de pied, tout particulièrement lorsque la direction d'impact n'est pas parfaitement axiale.

En référence à présent aux figures 2 à 9 sera décrit ci-après un premier mode de réalisation particulier d'une pièce composite sacrificielle 1 selon l'invention, formée par l'association d'une pluralité d'alvéoles unitaires 3, dont l'une est représentée sur la partie gauche de la figure 2, avec une section transversale sensiblement circulaire et dont la paroi périphérique 5, représentée en pointillés, présente une épaisseur e décroissante de e1 à e2, e1>e2, dans la direction 8 de pénétration de l'objet impactant 2.

Dans ce mode de réalisation, chaque alvéole 3 de section circulaire de l'assemblage est reliée à au moins une alvéole 3 similaire qui lui est adjacente au moyen d'un élément de liaison 9 se présentant sous la forme d'une cloison, dont une partie est représentée en coupe au centre de la figure 2, deux alvéoles 3 reliées entre elles au moyen d'une telle cloison 9, et formant un module, étant représentées sur la partie droite de ladite figure.

L'assemblage des alvéoles 3 peut être ici qualifié de discontinu, lesdites alvéoles, de section ronde, n'étant pas directement en contact les unes avec les autres.

Tout préférentiellement, et comme illustré notamment sur la partie droite de la figure 3, l'épaisseur e' de la cloison 9 reliant deux alvéoles 3 adjacentes est, tout comme l'épaisseur e de la paroi périphérique 5 desdites alvéoles 3, décroissante dans la direction 8 de pénétration de l'objet impactant 2 dans la pièce 1.

En référence à présent à la figure 4, celle-ci illustre schématiquement et en perspective un premier mode de réalisation particulier d'une pièce composite 1 selon l'invention, formée par l'association d'une pluralité d'alvéoles unitaires 3 dont la section transversale est sensiblement circulaire, agencées, dans une première variante, sous la forme d'une poutre longiligne.

Dans cette variante, deux alvéoles adjacentes 3 sont reliées entre elles par un élément de liaison constitué par une cloison 9 d'épaisseur e' préférentiellement décroissante dans la direction 8, tout comme l'épaisseur e de la paroi périphérique 5 de chaque alvéole 3, tandis que, de manière avantageuse, le diamètre de ces alvéoles 3 est croissant dans cette direction 8.

A noter que, selon l'illustration reprise sur les figures 5 et 6, un mode de liaison similaire à celui décrit ci-dessus des alvéoles coniques 3 peut se faire dans une direction orthogonale, ce qui permet de fabriquer des pièces composites sacrificielles 1 de longueurs et de largeurs différentes, selon les besoins.

Ainsi, une alvéole unitaire 3 peut comporter deux portions d'élément de liaison 9, 9' agencées selon des directions orthogonales, comme illustré sur la partie gauche de la figure 5, l'épaisseur de la paroi périphérique de l'alvéole et de chaque portion d'élément de liaison étant toujours décroissante dans la direction de pénétration 8 de l'objet impactant.

L'association de quatre de ces alvéoles unitaires 3 peut alors permettre la formation d'un module, représenté à droite de la figure 5, composé de quatre de ces alvéoles 3 reliées entre elles, chaque alvéole 3 étant reliée aux deux alvéoles 3 qui lui sont adjacentes par deux éléments de liaison positionnés dans des plans orthogonaux.

Ainsi, dans une deuxième variante du premier mode de réalisation de l'invention, il est envisageable d'obtenir une pièce composite 1 formée par l'association d'une pluralité d'alvéoles 2 dont la section transversale est sensiblement ronde, agencées en sorte de former une boîte rectangulaire, comme représentée sur la figure 6, ou carrée, dont la longueur et la largeur peuvent varier.

Dans une telle variante, chacune des alvéoles 3 comporte au moins deux, voire trois ou quatre, portions d'éléments de liaison sous la forme d'une cloison, afin de permettre de relier ladite alvéole à deux, trois ou quatre alvéoles qui lui sont adjacentes pour former la boîte rectangulaire.

De telles formes restent, de manière avantageuse, parfaitement démoulables, ce qui permet d'envisager une production dans des moules simples, donc, in fine, une production économique.

Préférentiellement, il peut être ajouté, à la pièce composite sacrificielle 1, une semelle 11 en partie inférieure de ladite pièce 1, considérant la direction de pénétration 8 de l'objet impactant, autrement dit une semelle 11 positionnée au niveau de la deuxième extrémité 7 des alvéoles 3 qui composent la pièce composite 1.

Sur la figure 7 ci-jointe est ainsi illustrée une pièce composite sacrificielle, sous la forme d'une poutre longiligne, comportant une telle semelle inférieure 11, celle-ci étant de forme rectangulaire.

Cela étant, une pièce composite 1 se présentant sous la forme d'une boîte rectangulaire telle que représentée sur la figure 6 peut également, de manière avantageuse, comporter une telle semelle inférieure 11.

La présence d'une semelle inférieure 11 peut permettre l'interfaçage d'une pièce composite 1 la comportant.

Préférentiellement, la pièce composite sacrificielle 1 de l'invention peut incorporer une barre de liaison 12 surplombant les alvéoles 3.

La présence d'un tel élément augmentera avantageusement la résistance à l'impact pour une très faible pénétration de l'objet impactant 2.

Une telle barre de liaison 12 peut se présenter, selon l'exemple donné sur la figure 8, sous la forme d'une pluralité d'anneaux accolés linéairement, un anneau de la barre de liaison surplombant une alvéole 3, ou bien encore sous la forme d'une paroi rectangulaire, comme illustré sur la figure 9.

Une pièce composite sacrificielle 1, 10, 100 selon la présente invention, quel que soit le mode de réalisation retenu, notamment en ce qui concerne la disposition des alvéoles 3, 30, 300 et la section de celles-ci, peut comporter une semelle inférieure 11 et/ou une barre de liaison 12 surplombant lesdites alvéoles 3, 30, 300 qui composent ladite pièce 1, 10, 100.

Dans le cas où la pièce composite 1, 10, 100 comporte à la fois une semelle inférieure 11 et une barre de liaison 12 des alvéoles, un renforcement considérable en flexion de ladite pièce 1, 10, 100 ainsi constituée est observé.

Un deuxième mode de réalisation particulier d'une pièce composite sacrificielle 10 conforme à l'invention, illustré sur les figures 10 et 11, peut être réalisé à partir de l'assemblage d'alvéoles unitaires 30 de section transversale globalement carrée.

Ainsi, comme représenté, chacune des alvéoles 30 peut être parallélépipédique, tout en ayant une forme intérieure proposant une réduction longitudinale de l'épaisseur de la paroi périphérique 50 dans la direction de pénétration 8 de l'objet impactant 2, comme cela est plus particulièrement illustré sur les vues en coupe de la partie centrale de la figure 10 et de la figure 11.

Dans une première variante de ce deuxième mode de réalisation, la pièce composite sacrificielle 10, représentée à droite sur la figure 10, peut se présenter sous la forme d'une poutre rectiligne, celle-ci étant formée par l'association d'une pluralité d'alvéoles 30, de section transversale carrée, juxtaposées en continu.

Dans une deuxième variante de ce deuxième mode de réalisation, illustré sur la figure 11, la pièce composite sacrificielle 10, comporte une pluralité de poutres rectilignes dont l'une est représentée sur la figure 10, en sorte de former une boîte de forme rectangulaire dont la longueur et la largeur peuvent être variables et adaptées selon l'utilisation de ladite pièce 10, l'épaisseur de paroi des alvéoles 30 étant décroissante depuis la première extrémité 60 vers la seconde extrémité 70, tandis que, avantageusement, la surface de la section transversale interne des alvéoles 30 est croissante depuis ladite première 60 vers ladite seconde extrémité 70.

Là encore, dans ce mode de réalisation, la démoulabilité de la forme reste acquise.

Un troisième mode de réalisation particulier d'une pièce composite sacrificielle 100 conforme à l'invention, illustré sur les figures 12 et 13, peut être réalisé à partir de l'assemblage d'alvéoles unitaires 300 dont la section transversale est hexagonale.

Ainsi, comme représenté, il est possible de réaliser une pièce composite sacrificielle sous la forme d'un « nid d'abeille », tout en ayant une forme intérieure proposant une réduction longitudinale de l'épaisseur de la paroi périphérique 500 dans la direction de pénétration 8 de l'objet impactant 2, comme cela est plus particulièrement illustré sur les vues en coupe de la partie centrale de la figure 12 et de la figure 13.

Dans une première variante de ce troisième mode de réalisation, la pièce composite sacrificielle 100, représentée sur la partie droite de la figure 10, peut se présenter sous la forme d'une poutre rectiligne, celle-ci étant formée par l'association d'une pluralité d'alvéoles 300, de section transversale hexagonale, juxtaposées en continu.

Dans une deuxième variante de ce troisième mode de réalisation, illustré sur la figure 13, la pièce composite sacrificielle 100 comporte une pluralité de poutres rectilignes dont l'une est représentée sur la figure 12, en sorte de former une boîte de forme rectangulaire dont la longueur et la largeur peuvent être variables et adaptées selon l'utilisation de ladite pièce 100. L'épaisseur de paroi des alvéoles 300 est, tout comme dans les deux premiers modes de réalisation décrits, décroissante depuis la première extrémité 600 vers la seconde extrémité 700, tandis que, avantageusement, la surface de la section hexagonale interne des alvéoles 300 est croissante depuis ladite première 600 vers ladite seconde extrémité 700.

## Revendications

1. Pièce composite sacrificielle (1) absorbant l'énergie libérée au moment d'une collision d'un véhicule avec un objet impactant (2), ladite pièce (1) étant constituée d'un assemblage d'une pluralité d'alvéoles (3) présentant une section transversale globalement circulaire, chaque alvéole (3) comportant une paroi (5) reliant une première extrémité (6) et une deuxième extrémité (7) de ladite alvéole (3), la direction de pénétration (8) de l'objet impactant (2) dans ladite pièce (1) allant depuis ladite première extrémité (6) vers ladite deuxième extrémité (7), la paroi périphérique (5) de chaque alvéole (3) présentant une épaisseur (e) décroissante depuis ladite première extrémité (6) vers ladite seconde extrémité (7) de ladite alvéole (3), dans la direction de pénétration (8) de l'objet impactant (2), chaque alvéole (3) étant reliée à au moins une alvéole adjacente (3) au moyen d'un élément de liaison (9) sous la forme d'une cloison dont l'épaisseur (e') est décroissante dans la direction de pénétration (8) de l'objet impactant (2).

2. Pièce composite sacrificielle (1) selon la revendication 1, **caractérisée en ce que** chacune des alvéoles qui la composent présente une section transversale interne dont la surface est croissante depuis ladite première extrémité (6) vers ladite seconde extrémité (7) de ladite alvéole (3), dans la direction de pénétration (8) de l'objet impactant (2).

3. Pièce composite sacrificielle (1) selon l'une quelconque des revendications 1 ou 2, **caractérisée en ce qu'**elle comporte une semelle inférieure (11) considérant la direction de pénétration (8) de l'objet impactant (2).

4. Pièce composite sacrificielle (1) selon l'une quelconque des revendications 1 à 3, **caractérisée en ce qu'**elle comporte une barre de liaison (12) surplombant les alvéoles (3) considérant la direction de pénétration (8) de l'objet impactant (2).

## Patentansprüche

1. Opferteil (1) aus Verbundwerkstoff, das die bei einem Zusammenstoß eines Fahrzeugs mit einem Aufprallobjekt (2) freigesetzte Energie absorbiert, wobei das Teil (1) aus einer Anordnung einer Vielzahl von Kammern (3) mit im Wesentlichen kreisförmigem Querschnitt besteht, wobei jede Kammer (3) eine Wand (5) aufweist, die ein erstes Ende (6) und ein zweites Ende (7) der Kammer (3) verbindet, wobei die Eintrittsrichtung (8) des Aufprallobjekts (2) in das Teil (1) vom ersten Ende (6) zum zweiten Ende (7) verläuft, wobei die Umfangswand (5) jeder Kammer (3) eine Dicke (e) aufweist, die vom ersten Ende (6) zum zweiten Ende (7) der Kammer (3) in Eintrittsrichtung (8) des Aufprallobjekts (2) abnimmt, wobei jede Kammer (3) mittels eines Verbindungselements (9) in Form einer Trennwand, deren Dicke (e') in Eintrittsrichtung (8) des Aufprallobjekts (2) abnimmt, mit mindestens einer benachbarten Kammer (3) verbunden ist.

2. Opferteil (1) aus Verbundwerkstoff nach Anspruch 1, **dadurch gekennzeichnet, dass** jede der es bildenden Kammern einen inneren Querschnitt aufweist, dessen Fläche vom ersten Ende (6) zum zweiten Ende (7) der Kammer (3) in Eintrittsrichtung (8) des Aufprallobjekts (2) hin zunimmt.

3. Opferteil (1) aus Verbundwerkstoff nach einem der Ansprüche 1 oder 2, **dadurch gekennzeichnet, dass** es eine untere Sohle (11) umfasst, die in Eintrittsrichtung (8) des Aufprallobjekts (2) ausgerichtet ist.

4. Opferteil (1) aus Verbundwerkstoff nach einem der Ansprüche 1 bis 3, **dadurch gekennzeichnet, dass** es einen Verbindungssteg (12) umfasst, der die Kammern (3) in Eintrittsrichtung (8) des Aufprallobjekts (2) überragt.

## Claims

1. A sacrificial composite part (1) that absorbs the energy released when a vehicle collides with an impacting object (2), said part (1) consisting of an assembly of a plurality of cells (3) having a circular cross-section, each cell (3) comprising a wall (5) connecting a first end (6) and a second end (7) of said cell (3), the direction of penetration (8) of the impacting object (2) into said part (1) extending from said first end (6) towards said second end (7), the peripheral wall (5) of each cell (3) has a thickness (e) decreasing from said first end (6) towards said second end (7) of said cell (3), in the direction of penetration (8) of the impacting object (2), each cell (3) being connected to at least one adjacent cell (3) by a connecting element (9) in the form of a partition, the thickness (e') of which decreasing in the direction of penetration (8) of the impacting object (2).

2. The sacrificial composite part (1) according to claim 1, **characterised in that** each of the cells of which it is composed has an internal cross-section whose surface area increases from said first end (6) towards said second end (7) of said cell (3), in the direction of penetration (8) of the impacting object (2).

3. The sacrificial composite part (1) according to any one of claims 1 or 2, **characterised in that** it comprises a lower sole (11) considering the direction of penetration (8) of the impacting object (2).

4. The sacrificial composite part (1) according to any one of claims 1 to 3, **characterised in that** it comprises a connecting bar (12) overhanging the cells (3) as viewed in the direction of penetration (8) of the impacting object (2).
